# EUROPÄISCHE PATENTANMELDUNG

(11) **EP 4 238 741 A1**
(43) Veröffentlichungstag der Anmeldung: **06.09.2023**
(21) Anmeldenummer: 23188091.5
(22) Anmeldetag: 10.03.2022
(51) Int. Cl.: B29C 64/106, B29C 64/188, B29C 64/393, B33Y 50/02, B33Y 10/00, B33Y 30/00, B22F 10/22, B22F 10/38, B22F 10/85, B29C 64/40, B22F 12/53, B22F 12/55, B22F 12/67

(54) **VERFAHREN ZUR ADDITIVEN FERTIGUNG EINES BAUTEILS UNTER NUTZUNG WENIGSTENS EINER MIT FÜLLMATERIAL ZU FÜLLENDEN VOLUMENKAMMER**

(30) Priorität: 12.03.2021 DE 102021106037
(62) Teilanmeldung aus: 22712387.4
(71) Anmelder: AIM3D GmbH, 18069 Rostock (DE)
(72) Erfinder: LIEBERWIRTH, Clemens, 18059 Rostock (DE); DR. MORRISON, Vincent, 18292 Krakow am See (DE)
(74) Vertreter: Maikowski & Ninnemann Patentanwälte Partnerschaft mbB

(57) **Zusammenfassung**

Die vorgeschlagene Lösung betrifft insbesondere ein Verfahren zur additiven Fertigung eines Bauteils (1), wobei das Bauteil (1) mithilfe wenigstens eines Extruders einer 3D-Druckvorrichtung schichtweise aufgebaut wird.

Bei der additiven Fertigung wenigstens einer Bauteilschicht (10) des Bauteils (1) wird mithilfe des wenigstens einen Extruders
- in einem ersten Arbeitsschritt zunächst eine Außenkontur (10A) der Bauteilschicht (10) hergestellt, die sich in einer Schichtebene erstreckt und mindestens eine sich in eine zu der Schichtebene senkrechte Erstreckungsrichtung erstreckende Außenwandung (101, 102) zur zumindest teilweisen Berandung eines Volumenbereichs (100) umfasst, wobei innerhalb des Volumenbereichs (100) mindestens eine in Erstreckungsrichtung offene Volumenkammer (2) gebildet wird, und
- in wenigstens einem nachfolgenden, zweiten Arbeitsschritt die mindestens eine Volumenkammer (2) zumindest teilweise mit einem Füllmaterial gefüllt.

## Beschreibung

Die vorgeschlagene Lösung betrifft insbesondere ein Verfahren zur additiven Fertigung eines Bauteils.

Im Wege der additiven Fertigung eines Bauteils mithilfe einer 3D-Druckvorrichtung wird ein Bauteil schichtweise aufgebaut. Über wenigstens einen Extruder und hier insbesondere wenigstens eine innerhalb des Extruders vorgesehene Extruderschnecke wird dabei dann beispielsweise Metall-, Keramik-, und/oder Kunststoffgranulat geschmolzen und zu einem Druckkopf des Extruders gefördert, um hieraus ein Bauteil schichtweise aufzubauen. In der Praxis werden bisher bei einem 3D-Druck üblicherweise Vollkörperabschnitte des zu fertigenden Bauteils durch einen vollflächigen Auftrag von Druckmaterial in der jeweiligen Bauteilschicht hergestellt. Hierfür wird die entsprechende Fläche mittels des Druckkopfes in der Bauteilschicht komplett abgefahren, während kontinuierlich Druckmaterial ausgebracht wird.

Es besteht vor diesem Hintergrund weiterhin Bedarf an verbesserten Druckstrategien und damit Verfahren, mit denen sich die additive Fertigung beschleunigen lässt und/oder die additive Fertigung zusätzlich mit Blick auf bestimmte gewünschte Eigenschaften an dem zu fertigenden Bauteil flexibilisiert werden kann.

Diese Aufgabe ist sowohl mit einem Fertigungsverfahren des Anspruchs 1 als auch mit einer 3D-Druckvorrichtung des Anspruchs 19 gelöst.

Die vorgeschlagene Lösung sieht hierbei insbesondere vor, dass bei der additiven Fertigung wenigstens einer Bauteilschicht eines zu fertigenden Bauteils mithilfe wenigstens eines Extruders einer 3D-Druckvorrichtung
- in einem ersten Arbeitsschritt zunächst eine Außenkontur der Bauteilschicht hergestellt wird, die sich in einer Schichtebene erstreckt und mindestens eine sich in eine zu der Schichtebene senkrechte Erstreckungsrichtung erstreckende Außenwandung zur zumindest teilweisen Berandung eines Volumenbereichs umfasst, wobei innerhalb des Volumenbereichs mindestens eine in Erstreckungsrichtung offene Volumenkammer gebildet wird, und
- in wenigstens einem nachfolgenden, zweiten Arbeitsschritt die mindestens eine Volumenkammer zumindest teilweise mit einem Füllmaterial gefüllt wird.

Im Zuge des vorgeschlagenen Fertigung- respektive Druckverfahrens ist somit vorgesehen, zunächst schichtweise eine Außenkontur eines Bauteils mit wenigstens einem Volumenbereich und mindestens einer in Erstreckungsrichtung offenen Volumenkammer zu drucken und dann erst in einem nachfolgenden, zweiten Arbeitsschritt die mindestens eine bereits hergestellte Volumenkammer zumindest teilweise mit einem Füllmaterial zu füllen. Mit der Füllung der Volumenkammer wird dann beispielsweise der Aufbau der Bauteilschicht abgeschlossen. Dies schließt insbesondere eine vollständige oder auch nur teilweise Füllung der mindestens einen Volumenkammer mit Füllmaterial ein. Derart lassen sich beispielsweise in einer Bauteilschicht, die an dem fertigen Bauteil einen Vollkörperabschnitt bilden soll, zunächst vergleichsweise schnell zusammenhängend extrudierte Volumenkammern mit dem Überfahren einer Druckfläche durch den Extruder herstellen, bevor diese erst in einem nachfolgenden Arbeitsschritt mit Füllmaterial gefüllt werden. Hierdurch lässt sich insbesondere eine Beschleunigung des 3D-Druckverfahrens erreichen, da ein vollflächige Austrag von Druckmaterial für die Herstellung des Vollkörperabschnitts nicht nötig ist.

Im Zuge des vorgeschlagenen Verfahrens kann somit vorgesehen sein, in einem ersten Arbeitsschritt zunächst eine Außenkontur der Bauteilschicht herzustellen, die sich, bezogen auf ein kartesisches Koordinatensystem, in einer xz-Ebene erstreckt, und darüber hinaus mindestens eine sich in z-Richtung erstreckende Außenwandung zur zumindest teilweisen Berandung eines Volumenbereichs mit einer oder mehreren in z-Richtung offenen Volumenkammern auszubilden.

Grundsätzlich ist bei der vorgeschlagenen Lösung vorgesehen, dass sich die mindestens eine nachträglich zu füllende Volumenkammer über genau eine Bauteilschicht erstreckt, die aktuell herzustellen ist. Eine wenigstens teilweise Füllung der mindestens einen Volumenkammer wird somit abgeschlossen, bevor eine (in Erstreckungsrichtung) nachfolgende Bauteilschicht für das zu fertigende Bauteil hergestellt wird.

Des Weiteren kann vorgesehen sein, dass sich die Art der Ausbringung des Druckmaterials und dessen Aufbringen auf einer Druckfläche in Abhängigkeit davon unterscheidet, ob einerseits die Außenkontur oder eine Volumenkammer oder andererseits eine Füllung für eine Volumenkammer hergestellt wird. So kann für die Herstellung der Außenkontur und einer Volumenkammer ein strangweises Aufbringen von Druckmaterial vorgesehen sein, während die Füllung einer Volumenkammer über eine punktuelle Extrusion einer größeren Menge an Druckmaterial (und damit Füllmaterial für eine Volumenkammer), ähnlich einem Spritzgussvorgangs, vorgenommen wird.

Über eine oder mehrere vorgesehene Volumenkammern lassen sich insbesondere mechanische Eigenschaften des zu fertigenden Bauteils gezielter individualisieren, beispielsweise indem eine Volumenkammer oder mehrere Volumenkammern nicht oder allenfalls teilweise mit Füllmaterial gefüllt werden und/oder für das Füllmaterial ein anderes über einen Druckkopf des wenigstens einen Extruders ausgebrachtes Druckmaterial verwendet wird als für das Drucken der Außenkontur. Vorliegend wird davon ausgegangen, dass ein Extruder der Druckvorrichtung wenigstens eine Extruderschnecke zur Förderung des Druckmaterials an einen Druckkopf aufweist und der Druckkopf mit wenigstens einer - gegebenenfalls auswechselbar an einem Gehäuse des Extruders befestigten - Düse für das Ausbringen des Druckmaterials ausgebildet ist.

Beispielsweise sieht eine Ausführungsvariante des vorgeschlagenen Verfahrens vor, dass mehrere (mindestens zwei) Volumenkammern innerhalb des Volumenbereichs gebildet werden, die durch mindestens eine mithilfe des wenigstens einen Extruders in der Bauteilschicht hergestellte Zwischenwandung voneinander getrennt sind. Mithilfe eines Druckkopfs des Extruders wird somit in dem ersten Arbeitsschritt mindestens eine Zwischenwandung innerhalb des durch die Außenwandung berandeten Volumenbereichs hergestellt. Diese Zwischenwandung berandet damit eine Volumenkammer für das nachfolgend einzubringende Füllmaterial.

Die mehreren Volumenkammern können in einem vorgegebenen Muster innerhalb des Volumenbereichs angeordnet werden. So ist dann beispielsweise in einem Speicher der 3D-Druckvorrichtung ein bestimmtes Muster für die herzustellenden Volumenkammern hinterlegt. Ein solches Muster kann je nach Anwendungsfall und insbesondere dem zu fertigenden Bauteil oder Bauteilabschnitt variierbar sein.

Beispielsweise sind in dem Muster die Volumenkammern regelmäßig oder unregelmäßig ausgeformt und/oder regelmäßig oder unregelmäßig verteilt angeordnet. Beispielsweise kann ein Muster aus einer regelmäßigen Anordnung identisch ausgeformter Volumenkammern bestehen. Ebenso ist aber auch die Vorgabe eines Musters mit unregelmäßig verteilten und verschieden dimensionierten Volumenkammern möglich.

In einer Ausführungsvariante ist mindestens eine der Volumenkammern wabenförmig oder kanalförmig. Dies schließt insbesondere die Herstellung einer Wabenstruktur mit mehreren wabenförmigen Volumenkammern innerhalb des Volumenbereichs der aktuell herzustellenden Bauteilschicht ein. Insbesondere ist die Herstellung eines 3D-Wabenmusters (auf Englisch: "3D honeycomb pattern") möglich, wobei dann die hierzu gehörenden wabenförmigen Volumenkammern jedenfalls zumindest teilweise in einem nachfolgenden, zweiten Arbeitsschritt mit Füllmaterial gefüllt werden.

Alternativ oder ergänzend kann mindestens eine der Volumenkammern mit einer rechteckförmigen, dreiecksförmigen und/oder ringförmigen (insbesondere kreisringförmigen oder elliptischen) Grundfläche gebildet sein.

Die Größe und Form der Volumenelemente ist in einer Ausführungsvariante beispielsweise für eine möglichst hohe Bauteildichte vorgegeben, sodass das nachträglich extrudierte Füllmaterial die Volumenelemente lückenlos füllen kann. Für eine derartige Druckstrategie bietet sich beispielsweise eine Volumenkammergeometrie nach Art eines dreidimensionalen Sechsecks an. Für andere zu füllende Volumenkammerstrukturen können aber auch beispielsweise die vorstehend angesprochenen anderen Geometrien von Vorteil sein.

Über die Größe und Form der Volumenkammern innerhalb einer Bauteilschicht lässt sich beispielsweise auch ein topologisch optimierter Kraftfluss innerhalb des Bauteils realisieren. Gegebenenfalls wird eine Füllung von Volumenkammern beispielsweise nur in lasttragenden Abschnitten des zu fertigenden Bauteils vorgenommen. Ein Teil der hergestellten Volumen kann auch bewusst ungefüllt und damit leer belassen, um Gewicht zu sparen. Insbesondere mit Blick auf Leichtbauaspekte kann dementsprechend in einer Ausführungsvariante auch nur ein Teil der mehreren Volumenkammern mit Füllmaterial (vollständig) gefüllt werden. Einige der hergestellten Volumenkammern bleiben somit leer und schaffen Hohlräume definierter Größe innerhalb des zu fertigenden Bauteils.

Mit Blick auf die Einstellung bestimmter mechanischer und/oder thermisches Eigenschaften des zu fertigenden Bauteils sieht eine Ausführungsvariante eines vorgeschlagenen Verfahrens vor, einen ersten Teil der Volumenkammern mit einem ersten Füllmaterial und wenigstens einen weiteren Teil der Volumenkammern mit einem zu dem ersten Füllmaterial verschiedenen zweiten Füllmaterial zu füllen. So kann es sich beispielsweise für die Erzielung unterschiedlicher Dämpfungseigenschaften innerhalb des fertigenden Bauteils anbieten, unterschiedliche Füllmaterialien für eine Füllung der hergestellten Volumenkammern zu verwenden. Die Verwendung eines anderen Füllmaterials kann beispielsweise einschließen, dass wenigstens eines der Füllmaterialien ein aufschäumendes und/oder schwingungsdämpfendes Füllmaterial ist.

Alternativ oder ergänzend können die mindestens eine Außenwandung und die mindestens eine Zwischenwandung aus demselben Material oder unterschiedlichen Materialien hergestellt werden. Mit Blick auf die erzielbaren Geschwindigkeitsvorteile bei der Herstellung kann sich die Verwendung genau eines Materials sowohl für die Herstellung der mindestens einen Außenwandung als auch die mindestens eine Zwischenwandung anbieten. Mit Blick auf die Bereitstellung der Außenwandung und einer Zwischenwandung mit unterschiedlichen Eigenschaften kann insbesondere hierbei auch vorgesehen werden, dass die mindestens eine Außenwandung und die mindestens eine Zwischenwandung mit unterschiedlichen Wandstärken hergestellt werden. Unterschiedliche Wandstärken können sich aber selbstverständlich auch bei einer Außenwandung und einer Zwischenwandung anbieten, die aus unterschiedlichen Materialien hergestellt werden.

In einer Ausführungsvariante wird die Wandstärke der mindestens einen Außenwandung beispielsweise größer als eine vorgegebene Mindestwandstärke vorgegeben, wobei diese Mindestwandstärke für die Außenwandung größer ist als eine maximale Wandstärke (Maximalwandstärke) der mindestens einen Zwischenwandung. Im Ergebnis ist somit dann eine Zwischenwandung stets um ein definiertes Maß dünner als eine Außenwandung. Dies kann für den weiteren Extrusionsprozess von Vorteil sein, beispielsweise um sicherzustellen, dass die Außenkontur stets durch das eingebrachte Füllmaterial unbeeinträchtigt bleibt, während die Zwischenwandung durch das nachträglich eingebrachte Füllmaterial wenigstens lokal aufgeschmolzen wird.

Grundsätzlich können die mindestens eine Außenwandung und die mindestens eine Zwischenwandung beim Vorsehen mehrerer Volumenkammern mit unterschiedlichen Druckköpfen der 3D-Druckvorrichtung hergestellt werden. Beispielsweise lassen sich durch den Austrag über unterschiedliche Druckköpfe einer 3D-Druckvorrichtung in einem Arbeitsschritt unterschiedlich starke Wandungen herzustellen.

Für das Erzielen einer möglichst hohen Festigkeit an einem Vollkörperabschnitt des fertigen Bauteils sieht eine Ausführungsvariante vor, dass das Füllmaterial mithilfe des wenigstens einen Extruders in einem geschmolzenen Zustand in die mindestens eine Volumenkammer unter wenigstens lokalem Aufschmelzen der mindestens einen bereits hergestellten und mehrere Volumenkammern voneinander trennenden Zwischenwandung eingebracht wird. Die Prozessparameter des Extrusionsprozesses, insbesondere die Temperatur, ein Ausbringungsdruck und/oder eine Fließgeschwindigkeit des geschmolzenen Füllmaterials sowie das für die Herstellung der mindestens einen Zwischenwandung genutzte Material, das Material für die Füllung einer Volumenkammer und/oder eine Wandstärke der mindestens einen Zwischenwandung sind hierbei dann beispielsweise derart aufeinander abgestimmt, dass durch das geschmolzen in die mindestens eine Volumenkammer eingebrachte Füllmaterial ein wenigstens lokales Aufschmelzen der bereits hergestellten Zwischenwandung erfolgt. Dies schließt insbesondere ein, dass die mindestens eine Zwischenwandung durch das eingebrachte Füllmaterial angeschmolzen oder durchschmolzen wird, sodass sich das Füllmaterial mit der mindestens einen Zwischenwandung stoffschlüssig verbindet. Sind das für die Herstellung der mindestens einen Zwischenwandung verwendete Material und das für die Herstellung einer Füllung verwendete (Füll-) Material identisch, sind beispielsweise dieses Material hinsichtlich seines Schmelzpunktes, seiner thermischen Eigenschaften und/oder seiner Fließfähigkeit und die Wandstärke der mindestens einen Zwischenwandung abgestimmt, sodass das geschmolzen eingebrachte Füllmaterial ein wenigstens lokales Aufschmelzen der bereits hergestellten Zwischenwandung erreicht. In der fertigen Bauteilschicht ergibt sich hierdurch ein Vollkörperabschnitt hoher Festigkeit.

Ohne Beeinträchtigung der bereits hergestellten Außenkontur soll demgegenüber das Füllmaterial mithilfe des wenigstens einen Extruders in einem geschmolzenen Zustand in die die mindestens eine Volumenkammer eingebracht werden. Hierbei sind beispielsweise Prozessparameter des Extrusionsprozesses, insbesondere Temperatur, Ausbringungsdruck und/oder Fließgeschwindigkeit des geschmolzenen Füllmaterials sowie das für die Herstellung der mindestens einen Außenwandung genutzte Material (zum Beispiel hinsichtlich seines Schmelzpunktes) und/oder eine Wandstärke der mindestens einen Außenwandung derart aufeinander abgestimmt, dass durch das geschmolzen in die mindestens eine Volumenkammer eingebrachte Füllmaterial keine Beeinträchtigung der bereits hergestellten Außenkontur erfolgt, insbesondere die mindestens eine Außenwandung durch das eingebrachte Füllmaterial nicht verformt, durchbrochen oder zerstört wird. Die Einbringung des Füllmaterials in eine Volumenkammer oder mehrerer Volumenkammer erfolgt somit unter Erhalt der bereits hergestellten Außenwandung und der damit definierten Außenkontur in der aktuell zu fertigenden Bauteilschicht.

Zur weiteren Individualisierung und/oder Optimierung der Bauteildichte an dem fertigen Bauteil kann vorgesehen sein, dass in Erstreckungsrichtung wenigstens eine weitere, mindestens eine weitere Volumenkammer aufweisende Bauteilschicht für das Bauteil mithilfe des wenigstens einen Extruders hergestellt wird, wobei die mindestens eine weitere Volumenkammer zu der mindestens einen Volumenkammer der darunterliegenden Schicht.
- in einer zu der Erstreckungsrichtung senkrecht verlaufenden Richtung x oder y versetzt und/oder
- um eine zu der x-Richtung parallele X-Achse gedreht und/oder
- um eine zu der y-Richtung parallele Y-Achse gedreht
angeordnet wird. Mit einem Versatz (insbesondere in Erstreckungsrichtung) angeordneter Volumenkammern werden beispielsweise Schwachstellen in den Trennebenen vermieden und eine Bildung und/oder ein Wachstum von Rissen innerhalb des Bauteils unterbunden. Einer 3D-Wabenstruktur und mithin von wabenförmigen Volumenkammern nach Art dreidimensionaler Sechsecke ist beispielsweise ein entsprechender Versatz inhärent. Bei würfelförmigen Volumenkammern ließe sich ein entsprechender Versatz beispielsweise über unterschiedliche Höhen der in Erstreckungsrichtung ersten und letzten Würfelreihe einer entsprechenden Bauteilschicht realisieren.

Im Zuge eines vorgeschlagenen Verfahrens kann das zur Herstellung der Außenkontur verwendete Material und/oder das Füllmaterial ein Kunststoff, ein Metall oder eine Keramik als Bestandteil aufweisen. Insbesondere können Metall-, Keramik-, und/oder Kunststoffgranulate dem Extruder der 3D-Druckvorrichtung zugeführt werden, um hiermit die Außenkontur und/oder eine Füllung für eine Volumenkammer zu bilden. Alternativ ist beispielsweise auch eine Herstellung mit Filament oder im Wege eines Wire Arc Additive Manufacturing (WAAM) möglich.

Ein Aspekt der vorgeschlagenen Lösung betrifft ferner eine 3D-Druckvorrichtung zur additiven Fertigung eines Bauteils. Die 3D-Druckvorrichtung umfasst für einen schichtweisen Aufbau des Bauteils wenigstens einen Extruder, mindestens einen den Extruder steuernden Prozessor und mindestens einen Speicher für an den Prozessor gerichtete Steuerbefehle. Bei einer vorgeschlagenen 3D-Druckvorrichtung enthält der Speicher (Steuer-) Befehle, die bei der Ausführung durch den mindestens einen Prozessor den Extruder veranlassen, bei der additiven Fertigung wenigstens einer Bauteilschicht für das Bauteil
- in einem ersten Arbeitsschritt zunächst eine Außenkontur der Bauteilschicht herzustellen, die sich in einer Schichtebene erstreckt und mindestens eine sich in eine zu der Schichtebene senkrechte Erstreckungsrichtung erstreckende Außenwandung zur zumindest teilweisen Berandung eines Volumenbereichs umfasst, sowie innerhalb des Volumenbereichs mindestens eine in Erstreckungsrichtung offene Volumenkammer zu bilden, und
- in wenigstens einem nachfolgenden, zweiten Arbeitsschritt die mindestens eine Volumenkammer zumindest teilweise mit einem Füllmaterial zu füllen.

In einer Ausführungsvariante ist vorgesehen, in Erstreckungsrichtung wenigstens eine weitere Bauteilschicht für das Bauteil mithilfe des wenigstens einen Extruders herzustellen, wobei vor dem Aufbringen von Material zur Bildung der wenigstens einen weiteren Bauteilschicht durch den Extruder eine Glättung der zuvor mit der mindestens einen Volumenkammer hergestellten Bauteilschicht erfolgt. Derart kann vor der Herstellung einer weiteren Bauteilschicht zunächst eventuell überschüssiges und in Erstreckungsrichtung überstehendes Material, insbesondere für die Füllung einer Volumenkammer verwendetes Füllmaterial, der zuvor hergestellten Bauteilschicht gezielt entfernt werden. Die Glättung kann beispielsweise durch eine (noch) heiße Düse des Extruders, die für das Ausbringen des Materials vorgesehen ist, und/oder wenigstens ein separates Glättelement, insbesondere einen Rakel, eine Klinge, einen Draht oder eine Rolle erfolgen, das entlang der zuvor mit der mindestens einen Volumenkammer hergestellte Bauteilschicht verfahren wird.

Eine vorgeschlagene 3D-Druckvorrichtung eignet sich somit insbesondere zur Durchführung einer Ausführungsvariante eines vorgeschlagenen Fertigungsverfahrens. Vorstehend und nachstehend erläuterte Merkmale und Vorteile von Ausführungsvarianten eines vorgeschlagenen Fertigungsverfahrens gelten somit auch für Ausführungsvarianten einer vorgeschlagenen 3D-Druckvorrichtung und umgekehrt.

Der Speicher mit den (Steuer-) Befehlen kann bei einer Ausführungsvariante räumlich separiert von dem Extruder der 3D-Druckvorrichtung sein. Beispielsweise umfasst die 3D-Druckvorrichtung ein Gehäuse, in dem eine Extrudereinheit mit dem mindestens einen Extruder und eine Druckplattform für das zu fertigende Bauteil angeordnet sind, sowie eine innerhalb des Gehäuses untergebrachte oder außerhalb des Gehäuses angeordnete Rechnereinheit mit dem mindestens einen Prozessor sowie dem Speicher. Auf der Rechnereinheit ist dann beispielsweise eine Steuerungssoftware mit den Steuerbefehlen für den Extruder ausführbar.

Die beigefügten Figuren veranschaulichen exemplarisch mögliche Ausführungsvarianten der vorgeschlagenen Lösung.

Hierbei zeigen:
- Figur 1: eine Bauteilschicht eines additiv mit einer Ausführungsvariante eines vorgeschlagenen Verfahrens zu fertigenden Bauteils, wobei in der dargestellten Bauteilschicht bereits ein definiertes Muster mit Volumenkammern hergestellt ist, dessen Volumenkammern zumindest teilweise mit einem Füllmaterial gefüllt werden;
- Figuren 2A-2M: exemplarisch weitere mögliche Muster für unterschiedlich geformte Volumenkammern, die an einem Bauteilabschnitt im Wege der additiven Fertigung mit einer Ausführungsvariante eines vorgeschlagenen Verfahrens hergestellt und nachfolgend zumindest teilweise mit Füllmaterial gefüllt werden;
- Figur 3: in mit der Figur 1 übereinstimmenden perspektivischer Darstellung eine weitere Ausführungsvariante, bei der Volumenkammern der aktuell herzustellenden Bauteilschicht mit unterschiedlichen Materialien gefüllt werden;
- Figur 4: in Draufsicht eine Weiterbildung, bei der Volumenkammern mit Versatz nach einem schachbrettartigen Muster mit Füllmaterial gefüllt werden;
- Figur 4A: eine Schnittdarstellung des Bauteils der Figur 4 gemäß der Schnittlinie A-A der Figur 4;
- Figur 5: ein Ablaufdiagramm einer Ausführungsvariante der vorgeschlagenen Lösung;
- Figur 6: die Herstellung des Bauteils der Figuren 1 und 3 mit einer Bauteilschicht, die mit einem aus dem Stand der Technik bekannten Verfahren vollflächig ausgeführt wurde.

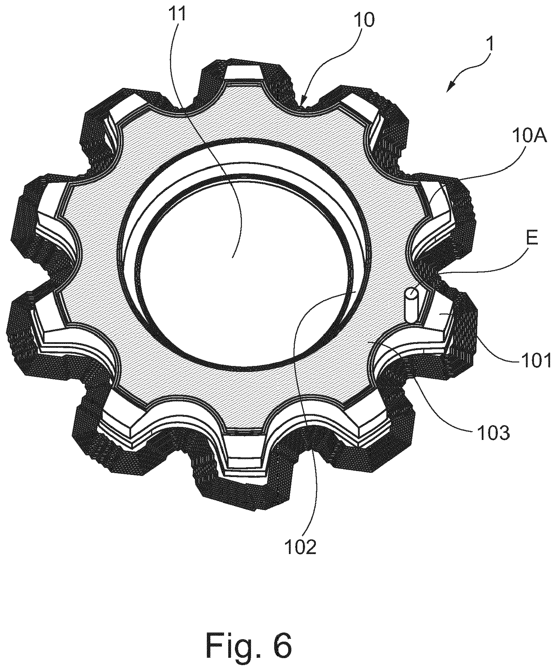

Die Figur 6 zeigt ein Bauteil nach Art eines Zahnrades, das mit einem aus dem Stand der Technik bekannten additiven Fertigungsverfahren hergestellt ist. Hierbei wird über eine 3D-Druckvorrichtung, beispielsweise aus einem Kunststoffmaterial, das Bauteil 1 schichtweise aufgebaut, wobei in der Figur 6 die Fertigung einer von mehreren Bauteilschichten 10 visualisiert ist. Beim Erstellen der dargestellten Bauteilschicht 10 wird über einen Druckkopf E eines Extruders der 3D-Druckvorrichtung das für die Herstellung verwendete Kunststoffmaterial ausgebracht, um in einem Arbeitsschritt sowohl eine Außenkontur 10A als auch einen als Vollkörperabschnitt ausbildeten Bauteilabschnitt 103 der Bauteilschicht 10 zu erstellen, der zwischen zwei Außenwandungen 101 und 102 des Bauteils 1 vorhanden sein soll. Der entsprechende Bauteilabschnitt 103 erstreckt sich bei dem zahnradförmigen Bauteil 1 vorliegend zwischen einer, bezogen auf einen Mittelpunkt des Bauteils 1, radial außen liegenden Außenwandung 101 und einer radial innenliegenden Außenwandung 102, die eine Durchgangsöffnung 11 des Bauteils 1 umlaufend berandet. Um den massiven Bauteilabschnitt 103 in der Bauteilschicht 10 herzustellen, muss folglich über den Druckkopf E vergleichsweise viel geschmolzenes Druckmaterial, beispielsweise Kunststoffgranulat, vollflächig aufgebracht werden. Die Herstellung der Bauteilschicht 10 nimmt somit vergleichsweise viel Zeit in Anspruch. Darüber hinaus ist beispielsweise eine Anpassung einzelner Bereiche des Bauteilabschnitts 103 an unterschiedliche mechanische Anforderungen nicht ohne weiteres möglich. Hier schafft die vorgeschlagene Lösung Abhilfe.

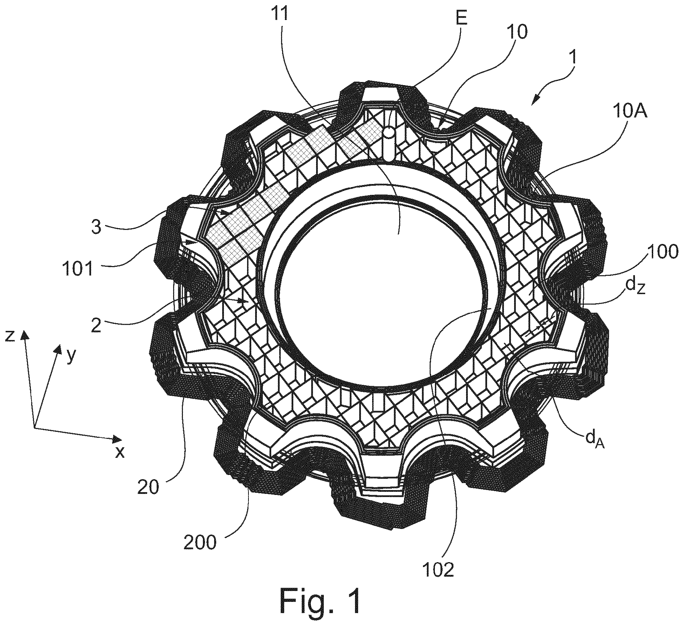

So ist bei einer Ausführungsvariante entsprechend der Figur 1 vorgesehen, dass für das Bauteil 1 zunächst in einem ersten Arbeitsschritt in einer Schichtebene, die vorliegend mit einer xy-Ebene eines kartesischen Koordinatensystems zusammenfällt, zunächst die Außenkontur(en) 10A der aktuell herzustellenden Bauteilschicht 10 mit den sich in einer Erstreckungsrichtung (z-Richtung) erstreckenden Außenwandungen 101 und 102 gespritzt respektive gedruckt werden. Ein zwischen den Außenwandungen 101 und 102 vorhandener Volumenbereich 100 wird dabei nicht vollflächig mit Druckmaterial befüllt. Vielmehr wird in dem Volumenbereich 100 mithilfe des Druckkopfes E der 3D-Druckvorrichtung ein Muster 200 von Volumenkammern 2 hergestellt. Hierfür werden mithilfe des Druckkopfes E Zwischenwandungen 200 in den Volumenbereich 100 gespritzt, die die einzelne Volumenkammern 2 voneinander separieren.

Bei der Ausführungsvariante der Figur 1 ist ein regelmäßiges Muster 200 mit quaderförmigen Volumenkammern 2 vorgesehen. Eine Kantenlänge eines Quaders einer jeweiligen Volumenkammer 2 in der xy-Ebene ist hierbei kleiner als ein Abstand zwischen der einen (ersten) Au ßenwandung 101 und der anderen (zweiten) Au ßenwandung 102, die die Außenkontur 10A der Bauteilschicht 10 definieren. Es wird folglich in dem Volumenbereich 100 ein Muster 200 nach Art einer Wabenstruktur hergestellt.

In einem nachfolgenden, zweiten Arbeitsschritt werden nun mithilfe des Druckkopfes E die hergestellten Volumenkammern 2 ganz oder teilweise mit Druckmaterial befüllt. Eine Füllung 3 einer Volumenkammer 2 kann hierbei mit demselben Druckmaterial erfolgen, mit dem auch die Außenwandungen 101 und 102 hergestellt wurden. Alternativ kann es sich bei dem für die Füllung 3 verwendeten (Füll-) Material um ein anderes Druckmaterial handeln. Auch kann das Material, mit dem die Zwischenwandungen 20 hergestellt wurden, zu dem Material für die Herstellung der Außenwandungen 101, 102 und der Füllung identisch oder verschieden sein.

Um eine möglichst hohe Bauteildichte und eine hohe mechanische Festigkeit zu erzielen, kann in dem zweiten Arbeitsschritt jede Volumenkammer 2 lückenlos mit Füllmaterial gefüllt und damit mit einer Füllung 3 versehen werden. Gegenüber der aus dem Stand der Technik bekannten Variante der Figur 6 und damit einem kompletten, großflächigen Abfahren des Volumenbereichs 100 mit dem Druckkopf E in einem Arbeitsschritt lässt sich selbst bei einer Befüllung jeder im z-Richtung offenen Volumenkammer 2 eine deutliche Reduzierung der Fertigungszeit für die Erzeugung eines massiven Volumenbereichs 100 und damit eines durchgängigen Vollkörperbauteilabschnitt erreichen.

Vorliegend sind die Prozessparameter des durchgeführten Extrusionsprozesses spezifisch angepasst, um mit dem Einbringen des geschmolzenen Füllmaterials in die Volumenkammern 2 die bereits hergestellte Außenkontur 10A nicht zu beeinträchtigen, gleichzeitig aber mit dem geschmolzenen Füllmaterial jeweils ein wenigstens lokales Aufschmelzen der bereits hergestellten Zwischenwandungen 20 zu erreichen. Hierfür sind insbesondere eine Wandstärke d_{A} der Außenwandungen 101, 102 und eine Wandstärke dz der Zwischenwandungen 20 in Abhängigkeit von der Fließfähigkeit und den thermischen Eigenschaften der in dem Extrusionsprozess verwendeten Materialien bzw. des in dem Extrusionsprozess verwendeten Materials eingestellt. So ist beispielsweise die Wandstärke d_{A} so groß, dass das nachträglich in die Volumenkammern 2 extrudierte (Füll-) Material die Außenkontur 10A nicht verformt, durchbricht oder zerstört. Die innenliegenden Zwischenwandungen 20, die als Trennwände für die Volumenkammern 2 wirken, sind wiederum mit einer derart geringen Wandstärke dz hergestellt, dass diese Zwischenwandungen 20 von dem nachträglich in die Volumenkammern 2 extrudierten (Füll-) Material angeschmolzen oder sogar durchschmolzen werden. Hierdurch lässt sich eine vergleichsweise hohe Festigkeit des Volumenbereichs 100 an dem fertiggestellten Bauteil 1 realisieren.

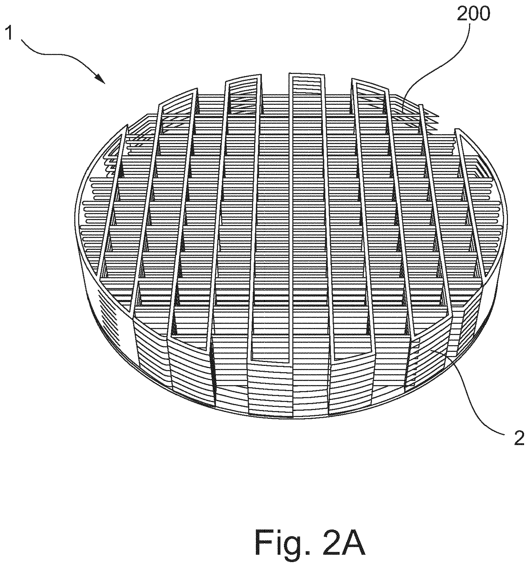

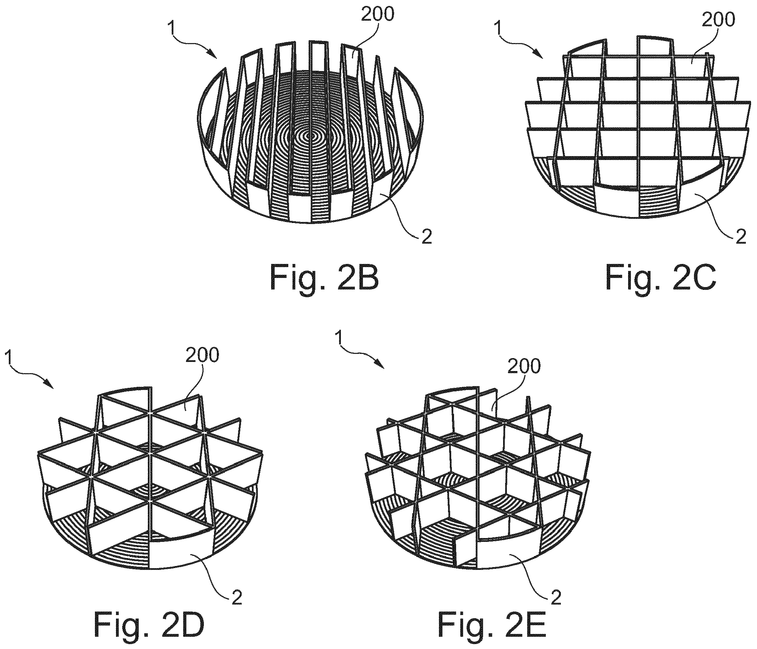

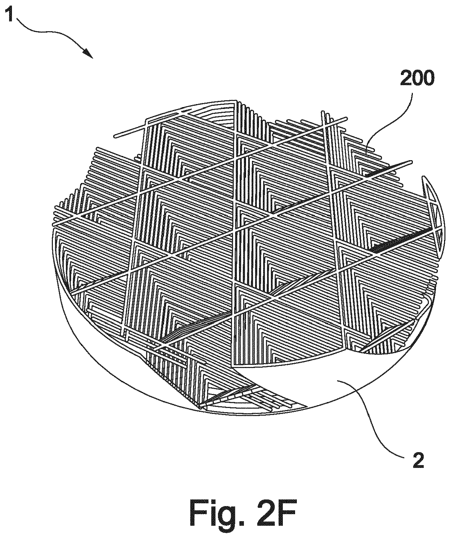

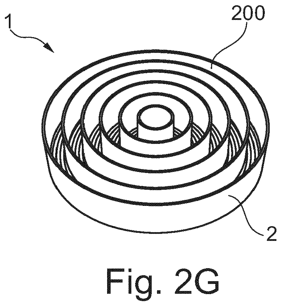

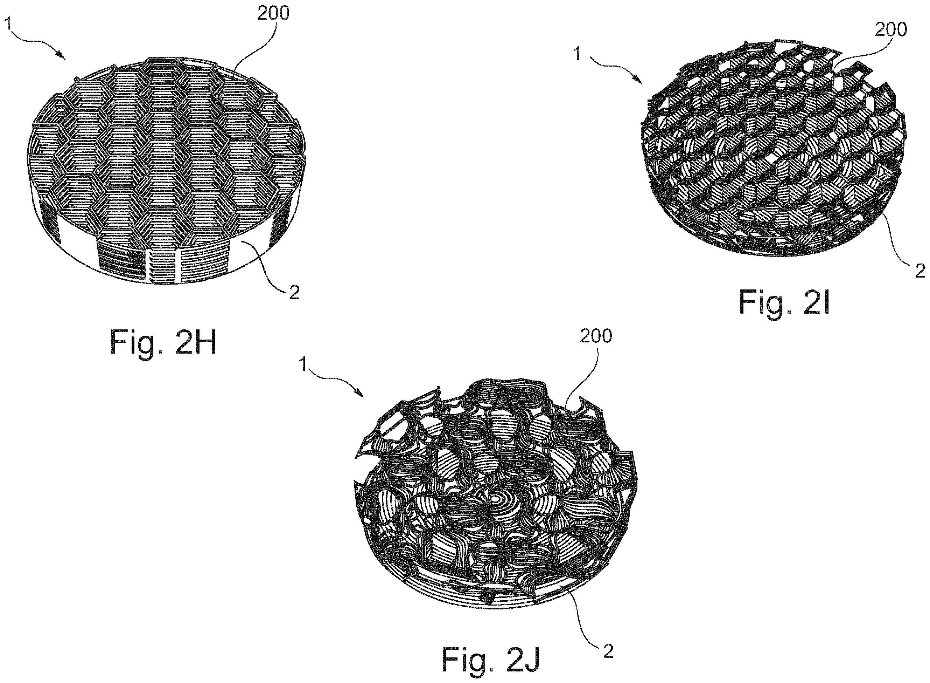

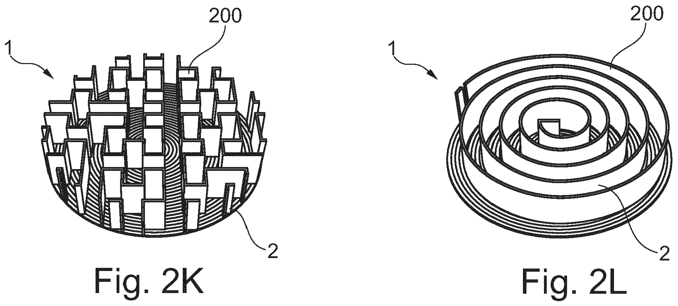

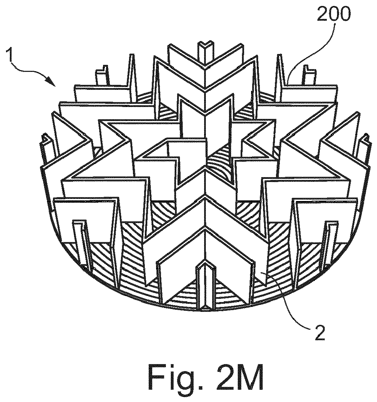

Wie anhand der Figuren 2A bis 2M exemplarisch anhand einiger Beispiele dargestellt ist, kann ein Muster 200 mit mehreren Volumenkammern 2 je nach Anwendungsfall unterschiedlich gestaltet sein. So können beispielsweise auch Größe und Form der Volumenkammern 2 in der Bauteilschicht 10 variieren, um optimierte Kraftflüsse innerhalb des fertiggestellten Bauteils 1 zu gewährleisten. Insbesondere sind Muster 200 denkbar, bei denen die Volumenkammern 2 eine rechteckförmige Grundfläche aufweisen, wie dies in den Figuren 2A und 2B dargestellt ist. Ebenso sind netzartige Muster 200 entsprechend den Figuren 2C, 2D und 2E mit Volumenkammern 2 mit quadratischer (Figur 2C), dreiecksförmiger (Figur 2D) oder sternenförmiger (Figur 2E) Grundfläche möglich. Auch sind würfelförmige (Figur 2F) oder kreisringförmige (Figur 2G) Volumenkammern 2 in einem Muster 200 möglich. Dies schließt insbesondere eine konzentrische Anordnung ringförmiger, kanalartiger Volumenkammern 2 entsprechend der Figur 2G ein. Auch sind Wabenstrukturen entsprechend den Mustern 200 der Figuren 2H und 2I möglich. Das Muster 200 der Figur 2I stellt dabei ein dreidimensionales Honigwabenmuster ("3D honeycomb pattern") dar. Auch sind gyroidförmige Strukturen (Figur 2J), durch eine Hilbert-Funktion vorgegebene Geometrien (Figur 2K), spiralförmige Verläufe (Figur 2L) und oktagrammförmige und spiralartig angeordnete Strukturen (Figur 2M) zur Ausbildung eines zweckangepassten Musters 200 möglich.

Die Volumenkammern 2 eines jeweiligen Musters 200 können hierbei teilweise auch unbefüllt bleiben, um das Bauteil 1 mit wohl definierten innenliegenden Hohlräumen zu versehen und damit leichter auszubilden.

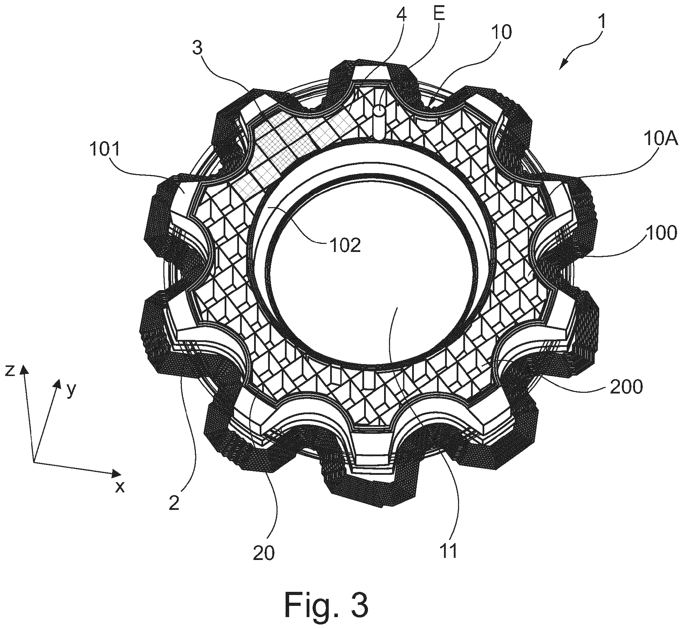

Wie anhand der Ausführungsvariante der Figur 3 veranschaulicht ist, können alternativ oder ergänzend auch einzelne Volumenkammern 2 mit unterschiedlichen Füllungen 3 und 4 versehen sein. Eine unterschiedliche zweite Füllung 4 kann hierbei beispielsweise mit einem anderen Füllmaterial erfolgen, um bestimmte Materialeigenschaften zu kombinieren. Beispielsweise kann das zweite Füllmaterial 4 aufschäumend sein und/oder schwingungsdämpfend wirken.

Auch bei der Ausführungsvariante der Figur 3 ist dabei ebenfalls vorgesehen, dass zunächst die Außenkontur 10A des Bauteils 1 in der aktuell herzustellenden Bauteilschicht 10 mit der Wandstärke d_{A} gedruckt wird. Zusätzlich erfolgt das Drucken einer in z-Richtung offenen Innenstruktur innerhalb des Volumenbereichs 100, die sich aus aneinandergesetzten Volumenkammern 2 mit gegebenenfalls unterschiedlicher Form und Größe zusammensetzt, wobei hier für die räumliche Trennung der Volumenkammern 2 vorgesehene Zwischenwandungen 20 eine kleinere Wandstärke dz aufweisen. In einem nachfolgenden, zweiten Arbeitsschritt werden die dann derart hergestellten Volumenkammern 2, zum Beispiel mit einem zweiten Extruder oder einem anderen Druckkopf gegebenenfalls aber auch mit demselben Extruder oder Druckkopf E, mit einem identischen Druckmaterial oder einem anderen Druckmaterial gefüllt und damit geschlossen. Hierbei sind die Prozessparameter des Extrusionsprozesses, insbesondere das für die Herstellung der Zwischenwandungen 20 und der Außenwandungen 101, 102 jeweils genutzte Material sowie die Wandstärken d_{A} und dz derart aufeinander abgestimmt, dass
(a) durch das geschmolzen in die Volumenkammern 2 eingebrachte Füllmaterial ein wenigstens lokales Aufschmelzen der bereits hergestellten Zwischenwandungen 20 erfolgt, sodass sich das Füllmaterial mit dem teilweise aufgeschmolzenen Material der Zwischenwandungen 2 stoffschlüssig verbindet, und
(b) durch das geschmolzen in die Volumenkammern 2 des Volumenbereichs 100 eingebrachte Füllmaterial keine Beeinträchtigung der bereits hergestellten Außenkontur 10A erfolgt.

In einer Ausführungsvariante kann ergänzend noch vorgesehen sein, dass vor dem Aufbringen von Material zur Bildung einen weiteren Bauteilschicht eine Glättung der zuvor mit den Volumenkammer 2 hergestellten Bauteilschicht 10 erfolgt. Derart kann vor der Herstellung einer weiteren Bauteilschicht zunächst eventuell überschüssiges und in z-Richtung überstehendes Material gezielt entfernt werden. Die Glättung kann beispielsweise durch die (noch) heiße Düse des Druckkopfes E und/oder wenigstens ein separates Glättelement, z.B. einen Rakel, eine Klinge, einen Draht oder eine Rolle, erfolgen, das entlang der zuvor mit den Volumenkammer 2 hergestellte Bauteilschicht 10 verfahren wird.

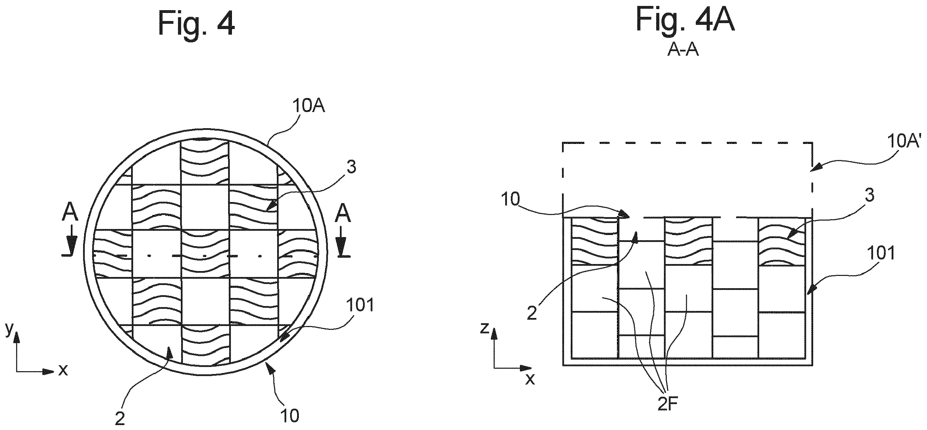

Die Figuren 4 und 4A zeigen eine Bauteilschicht 10 für das herzustellende Bauteil 1, bei der die Volumenkammern 2 mit einem Versatz in z-Richtung gefüllt werden und hierbei gefüllte Volumenkammern 2 in der xy-Ebene in einem schachbrettartigen Muster angeordnet sind.

Die Figur 4 zeigt in Draufsicht die Bauteilschicht 10 mit gefüllten und ungefüllten Volumenkammern 2, die in einem Schachbrettmuster angeordnet sind. Wie in der Schnittdarstellung der Figur 4A ersichtlich ist, sind hier in der aktuell herzustellenden Bauteilschicht 10 lediglich einzelne Volumenkammern 2 mit Füllmaterial 3 gefüllt worden. Diese sind in den Darstellungen 4 und 4A mit Wellenlinien schafft schraffiert. Bereits in einem vorangegangenen Arbeitsschritt gefüllte Volumenkammern sind vorliegend mit 2F gekennzeichnet. Benachbart zu jeder in der aktuellen Bauteilschicht 10 mit Füllmaterial 3 gefüllten Volumenkammer 2 liegen ungefüllte Volumenkammern 2 vor. Gegenüber diesen ungefüllten Volumenkammern 2 sind die aktuell gefüllten Volumenkammern 2 in z-Richtung höher ausgeführt, also durch höhere Zwischenwandungen 20 berandet (vorliegend exemplarisch ca. um eine halbe Kammerhöhe).

Nach Abschluss des Füllvorgangs wird die Bauteilschicht 10 geglättet. Danach erfolgt der nachfolgende Aufbau einer weiteren Bauteilschicht 10. Für die Herstellung dieser weiteren Bauteilschicht 10 werden dann die zuvor unbefüllt gelassenen (seinerzeit erst noch halbhohen) Volumenkammern 2 mit Füllmaterial 3 gefüllt. An deren Füllung schließt sich dann erneut eine Glättung parallel zur xy-Ebene an. Diese Art des Schichtenaufbaus erfolgt dann bis zum Erreichen einer gewünschten Bauteilhöhe und damit der Herstellung des Bauteils 1 mit einer in der Figur 4A exemplarisch wiedergegebenen finalen Bauteilkontur 10A`.

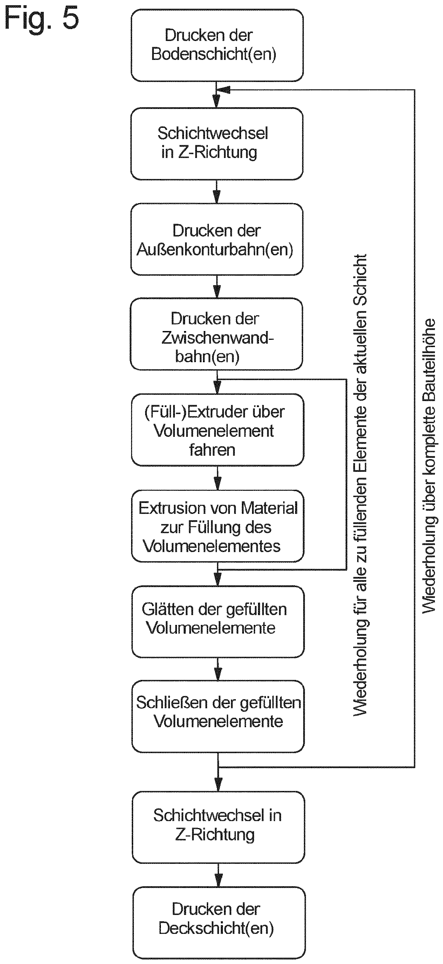

Die Figur 5 zeigt exemplarisch ein Ablaufschema für ein 3D-Druckverfahren gemäß der vorgeschlagenen Lösung, insbesondere für die Herstellung eines Bauteils 1 gemäß der Figuren 1 bis 4A.

In einem ersten Schritt wird zunächst mindestens eine Bodenschicht für das herzustellende Bauteil 1 gedruckt. Hiernach erfolgt der schichtweise Aufbau über die Herstellung einzelner Bauteilschichten 10 mithilfe von Volumenkammern 2. Hierbei werden in z-Richtung übereinander angeordnete Bauteilschichten 10 nacheinander hergestellt, bei denen zunächst bahnweise die Außenwandungen 101, 102 und Zwischenwandungen 20 hergestellt und damit Außenkonturbahnen und Zwischenwandbahnen gedruckt werden. Die Anzahl der Zwischenwandungen 20, eine Schichthöhe der aktuell herzustellenden Bauteilschicht 10 sowie ein Düsendurchmesser am Druckkopf E bestimmen dabei die Wandstärke dz der Zwischenwandungen 20.

Nach der bahnenweisen Herstellung der Außenwandungen 101 und 102 sowie der Zwischenwandungen 20 wird der Extruder mit dem Druckkopf E über die einzelnen bereits hergestellten Volumenkammern 2 gefahren, um diese zu füllen. Bei der Füllung der Volumenkammern 2, insbesondere in Eckbereichen, wird hierbei der Extruder mit seinem Druckkopf E stationär positioniert oder es erfolgt allenfalls eine leichte Bewegung. Es erfolgt folglich im Gegensatz zu der Herstellung der Außenwandungen 101, 102 und der Zwischenwandungen 20 kein schichtweise Abfahren von Bahnen. Vielmehr wird zur Füllung der Volumenkammern 2 (Füll-) Material ähnlich einem Spritzgussvorgang extrudiert, sodass eine volumetrische, kontinuierliche Füllung der Volumenkammern 2 erfolgt. Hierbei haben die Temperatur und Menge des ausgebrachten Materials den gewünschten Einfluss auf die Quervernetzung der Volumenkammern 2. Nach Abschluss der Füllung der in der herzustellenden Bauteilschicht 10 zu füllenden Volumenkammern 2 erfolgt eine Glättung und ein damit verbundenes Schließen der Volumenkammern 2.

Der schichtweise Aufbau mit Herstellung von Volumenkammern 2 und deren gezielten Füllung wird dabei wiederholt, bis die vorgesehene Bauteilhöhe des herzustellenden Bauteils 1 erreicht ist. Danach findet ein erneuter Schichtwechsel in z-Richtung und ein Drucken mindestens einer vorgesehenen Deckschicht für das Bauteil 1 statt.

Mit der vorgeschlagenen Lösung wird eine Druckstrategie zur Verfügung gestellt, die es ermöglicht, schichtbasierte Schwachstellen in einem 3D-Druckteil wie dem Bauteil 1 zu überwinden, indem größere zusammenhängend extrudierte Volumenkammern 2 zum Einsatz kommen. In diesem Zusammenhang kann auch vorgesehen sein, dass in aufeinanderfolgenden Bauteilschichten 10 des fertigzustellenden Bauteils 1 jeweils Muster 200 aus Volumenkammern 2 gebildet werden, wobei die Volumenkammern 2 der unterschiedlichen Bauteilschichten zueinander versetzt angeordnet sind. Insbesondere können die Volumenkammern 2 in z-Richtung versetzt angeordnet werden, um Schwachstellen in den Trennebenen zu vermeiden und eine Rissbildung oder zumindest ein Risswachstum an den Trennebenen zu unterbinden. In einer dreidimensionalen Wabenstruktur ist ein derartiger Versatz zwischen den wabenförmigen Volumenkammern 2 bereits inhärent vorgesehen. Bei würfelförmigen Volumenkammern 2 wäre ein entsprechender Versatz beispielsweise über unterschiedliche Höhen in z-Richtung aufeinanderfolgender erster und letzter Bauteilschichten respektive Würfelreihen realisierbar.

Das vorgeschlagene Verfahren und eine hierfür vorgesehene 3D-Druckvorrichtung mit einem Speicher, der entsprechende Steuerbefehle enthält, um einen oder mehrere Extruder der 3D-Druckvorrichtung entsprechend zur Herstellung des Bauteils 1 respektive einer Bauteilschicht 10 wie in den Figuren 1 bis 4A anzusteuern, kann sowohl mit Kunststoffmaterial, metallischem Material oder Keramikmaterial nutzen. Insbesondere kann ein entsprechender Extruder Metall-, Keramik- und/oder Kunststoffgranulat zur Herstellung eines Bauteils 1 verarbeiten.

### Bezugszeichenliste

- 1: Bauteil
- 10: Bauteilschicht
- 100: Volumenbereich
- 101: Erste Außenwandung
- 102: Zweite Außenwandung
- 103: Bauteilabschnitt
- 10A, 10A': Außenkontur
- 11: Durchgangsöffnung
- 2, 2F: Volumenkammer
- 20: Zwischenwandung
- 200: Muster
- 3: Füllung
- 4: Füllung (mit zweitem Füllmaterial)
- d_{A}, dz: Wandstärke
- E: Druckkopf

## Patentansprüche

1. Verfahren zur additiven Fertigung eines Bauteils (1), wobei das Bauteil (1) mithilfe wenigstens eines Extruders einer 3D-Druckvorrichtung schichtweise aufgebaut wird,
**dadurch gekennzeichnet, dass**
bei der additiven Fertigung wenigstens einer Bauteilschicht (10) des Bauteils (1) mithilfe des wenigstens einen Extruders
- in einem ersten Arbeitsschritt zunächst eine Außenkontur (10A) der Bauteilschicht (10) hergestellt wird, die sich in einer Schichtebene erstreckt und mindestens eine sich in eine zu der Schichtebene senkrechte Erstreckungsrichtung (z) erstreckende Außenwandung (101, 102) zur zumindest teilweisen Berandung eines Volumenbereichs (100) umfasst, wobei innerhalb des Volumenbereichs (100) mindestens eine in Erstreckungsrichtung (z) offene Volumenkammer (2) gebildet wird, und
- in wenigstens einem nachfolgenden, zweiten Arbeitsschritt die mindestens eine Volumenkammer (2) zumindest teilweise mit einem Füllmaterial gefüllt wird.

2. Verfahren nach Anspruch 1, **dadurch gekennzeichnet, dass** mehrere Volumenkammern (2) innerhalb des Volumenbereichs (100) gebildet werden, die durch mindestens eine mithilfe des wenigstens einen Extruders in der Bauteilschicht (10) hergestellte Zwischenwandung (20) voneinander getrennt sind.

3. Verfahren nach Anspruch 2, **dadurch gekennzeichnet, dass** die mehreren Volumenkammern (2) in einem vorgegebenen Muster (200) innerhalb des Volumenbereichs (100) angeordnet werden.

4. Verfahren nach Anspruch 3, **dadurch gekennzeichnet, dass** in dem Muster (200) die Volumenkammern regelmäßig oder unregelmäßig ausgeformt und/oder verteilt angeordnet sind.

5. Verfahren nach einem der Ansprüche 2 bis 4, **dadurch gekennzeichnet, dass** mindestens eine der Volumenkammern (2) wabenförmig oder kanalförmig ist und/oder mindestens eine der Volumenkammern (2) mit einer rechteckförmigen, dreiecksförmigen und/oder ringförmigen Grundfläche gebildet ist und/oder nur ein Teil der Volumenkammern (2) mit Füllmaterial gefüllt wird.

6. Verfahren nach einem der Ansprüche 2 bis 5, **dadurch gekennzeichnet, dass** ein erster Teil der Volumenkammern (2) mit einem ersten Füllmaterial und wenigstens ein weiterer Teil der Volumenkammern (2) mit einem zu dem ersten Füllmaterial verschiedenen zweiten Füllmaterial gefüllt wird und/oder die mindestens eine Außenwandung (101, 102) und die mindestens eine Zwischenwandung (20) aus demselben Material oder unterschiedlichen Materialien hergestellt werden.

7. Verfahren nach einem der Ansprüche 2 bis 6, **dadurch gekennzeichnet, dass** die mindestens eine Außenwandung (101, 102) und die mindestens eine Zwischenwandung (20) mit unterschiedlichen Wandstärken (d_{A}, d_{Z}) hergestellt werden.

8. Verfahren nach Anspruch 7, **dadurch gekennzeichnet, dass** die Wandstärke (d_{A}) der mindestens einen Außenwandung (101, 102) größer als eine vorgegebene Mindestwandstärke ist, die größer ist als eine Maximalwandstärke der mindestens einen Zwischenwandung (20).

9. Verfahren nach einem der Ansprüche 2 bis 8, **dadurch gekennzeichnet, dass** die mindestens eine Außenwandung (101, 102) und die mindestens eine Zwischenwandung (20) mit unterschiedlichen Druckköpfen (E) der 3D-Druckvorrichtung hergestellt werden.

10. Verfahren nach einem der Ansprüche 2 bis 9, **dadurch gekennzeichnet, dass** das Füllmaterial mithilfe des wenigstens einen Extruders in einem geschmolzenen Zustand in die mindestens eine Volumenkammer (2) unter wenigstens lokalem Aufschmelzen der mindestens einen bereits hergestellten Zwischenwandung (20) eingebracht wird.

11. Verfahren nach einem der vorgehenden Ansprüche, **dadurch gekennzeichnet, dass** das Füllmaterial mithilfe des wenigstens einen Extruders in einem geschmolzenen Zustand in die mindestens eine Volumenkammer (2) ohne Beeinträchtigung der bereits hergestellten Außenkontur (10A) eingebracht wird.

12. Verfahren nach einem der vorgehenden Ansprüche, **dadurch gekennzeichnet, dass** in Erstreckungsrichtung (z) wenigstens eine weitere Bauteilschicht für das Bauteil (1) mithilfe des wenigstens einen Extruders hergestellt wird und eine Glättung der zuvor mit der mindestens einen Volumenkammer (2) hergestellten Bauteilschicht (10) erfolgt, bevor durch den Extruder Material zur Bildung der wenigstens einen weiteren Bauteilschicht aufgebracht wird.

13. Verfahren nach Anspruch 12, **dadurch gekennzeichnet, dass** die Glättung durch eine heiße Düse des Extruders, die für das Ausbringen des Materials vorgesehen ist, und/oder wenigstens ein separates Glättelement, insbesondere einen Rakel, eine Klinge, einen Draht oder eine Rolle erfolgt, das entlang der zuvor mit der mindestens einen Volumenkammer (2) hergestellte Bauteilschicht (10) verfahren wird.

14. 3D-Druckvorrichtung zur additiven Fertigung eines Bauteils (1), wobei die 3D-Druckvorrichtung für einen schichtweisen Aufbau des Bauteils (1) wenigstens einen Extruder, mindestens einen den Extruder steuernden Prozessor und mindestens einen Speicher umfasst,
**dadurch gekennzeichnet, dass**
der Speicher Befehle enthält, die bei der Ausführung durch den mindestens einen Prozessor den Extruder veranlassen, bei der additiven Fertigung wenigstens einer Bauteilschicht (10) für das Bauteil (1)
- in einem ersten Arbeitsschritt zunächst eine Außenkontur (10A) der Bauteilschicht (10) herzustellen, die sich in einer Schichtbene erstreckt und mindestens eine sich in eine zu der Schichtebene senkrechte Erstreckungsrichtung (z) erstreckende Außenwandung (101, 102) zur zumindest teilweisen Berandung eines Volumenbereichs (100) umfasst, sowie innerhalb des Volumenbereichs (100) mindestens eine in Erstreckungsrichtung offene Volumenkammer (2) zu bilden, und
- in wenigstens einem nachfolgenden, zweiten Arbeitsschritt die mindestens eine Volumenkammer (2) zumindest teilweise mit einem Füllmaterial zu füllen.
